# EUROPÄISCHE PATENTANMELDUNG

(11) **EP 2 608 309 A1**
(43) Veröffentlichungstag der Anmeldung: **26.06.2013**
(21) Anmeldenummer: 11194916.0
(22) Anmeldetag: 21.12.2011
(51) Int. Cl.: H01M 10/50

(54) **Batteriemodul mit Batteriemodulgehäuse und Batteriezellen**

(71) Anmelder: Fortu Intellectual Property AG, 6060 Sarnen (CH)
(72) Erfinder: Die Erfindernennung liegt noch nicht vor
(74) Vertreter: Durm & Partner

(57) **Zusammenfassung**

Ein Batteriemodul umfasst ein Batteriemodulgehäuse mit Teilen aus Kunststoff und mehrere prismatische Batteriezellen, die ein Zellgehäuse mit vier Seitenwänden aufweisen. Zwei parallele Seitenwände sind größer als die beiden anderen Seitenwände. Der Elektrolyt der Batteriezellen basiert bevorzugt auf SO₂. Das Batteriemodulgehäuse (2) umfasst ein Kühlsystem mit einer Kanalstruktur (32) und einem flüssigen Kühlmittel. Die Kanalstruktur (32) steht mit einem Kühlmitteleinlass (11) und einem Kühlmittelauslass (12) des Batteriemodulgehäuses (2) in Fluidverbindung. Zwischen zwei benachbarten Batteriezellen (5) ist eine Zwischenwand (13) aus Kunststoff im wesentlichen parallel zu den größeren Seitenwänden (7) der Batteriezelle (5) angeordnet. Ein Kanal (31) der Kanalstruktur (32) verläuft wenigstens teilweise in der Zwischenwand (13) und ist mittels einer Ausnehmung (33) der Zwischenwand (13) gebildet, die mindestens zu einer benachbarten Seitenwand (7) der Batteriezelle (5) hin offen ist. Zwischen der Seitenwand (7) der Batteriezelle (5) und der Zwischenwand (13) ist eine Kunststofftrennschicht (38), deren Material bevorzugt verschieden ist von dem Material der Zwischenwand (13) und deren Dicke geringer ist als die Dicke der Zwischenwand (13), derart angeordnet, dass der mittels der Ausnehmung (33) gebildete Kanal (31) des Kühlsystems durch die Kunststofftrennschicht (38) geschlossen ist.

## Beschreibung

Die vorliegende Erfindung betrifft eine Batteriemodul umfassend ein Batteriemodulgehäuse mit Teilen aus Kunststoff und mehrere prismatische Batteriezellen, die ein Zellgehäuse mit vier Seitenwänden aufweisen.

Wiederaufladbare Batteriezellen sind auf vielen technischen Gebieten von großer Bedeutung. Sie werden häufig für Anwendungen eingesetzt, bei denen nur geringe Stromstärken benötigt werden, wie beispielsweise Mobiltelefone. Daneben gibt es einen hohen Bedarf an Batteriezellen für Hochstromanwendungen, insbesondere für den elektrischen Antrieb von Fahrzeugen. Gerade im Automobilbereich werden viele Batteriemodule eingesetzt, die aus mehreren prismatischen Batteriezellen bestehen, da diese Batteriezellen einen kompakten Aufbau des Batteriemoduls erlauben und den im Kraftfahrzeug zur Verfügung stehenden Raum bestmöglich ausnutzen.

Ein Batteriemodul umfasst eine Mehrzahl von Batteriezellen, die eine für die Zelle charakteristische Spannung liefern. Die Spannung ist abhängig von der verwendeten Materialkombination. Ein oder mehrere Batteriemodule, die elektrisch verschaltet sind, bilden eine Batterie. Um die Anforderungen an die Leistungs- und Energiemengen einer Batterie zu erfüllen, werden Batteriemodule aus mehreren Batteriezellen aufgebaut, die elektrisch in Serie und/oder parallel geschaltet werden.

Während des Betriebs einer Batterie entsteht Wärme, wobei die Wärmemenge unter anderem abhängig von der verwendeten Elektrolytlösung in der Batteriezelle ist. Im Stand der Technik sind mehrere wiederaufladbare Batterien bekannt, die ein Kühlen einer Batterie durch eine Kühlvorrichtung vorsehen. Beispielsweise werden in der US 2003/0017384 A1 Batteriezellen gezeigt, bei denen eine Metallplatte in die Seitenwand des Gehäuses integriert ist und an ein plattenförmiges Wärmeübertragungsteil angrenzt. Die EP 2 380 223 A1 sieht für eine Batterie mit Batteriezellen Wärmeleitelemente und Wärmeleitplatten in einem Gehäuse vor, wobei die Wärmeabführung aus den Batteriezellen über die Wärmeleiteinrichtungen erfolgt. Beispielsweise wird neben der Kühlung der Batteriezellen mittels Kühlplatten im Stand der Technik auch eine Flüssigkeitskühlung oder eine Luftkühlung vorgesehen, etwa in US 7,981,538 bzw. US 6,296,968 am Beispiel einer Nickel-Cadmium-Batterie und einer Nickel-Metallhydrid-Batterie beschrieben.

Wiederaufladbare Lithium-Batteriezellen sind in der Praxis nahezu ausschließlich Lithium-lonen-Zellen. In der Regel besteht die negative Elektrode aus Graphit, der auf einem Kupferableitmaterial aufgebracht wird. Die positive Elektrode basiert in der Regel auf Lithium-Kobalt-Oxid, das einen Aluminiumableiter besitzt. Der Transport der Ionen innerhalb der Zelle erfolgt mittels der Elektrolytlösung, die die Ionenbeweglichkeit gewährleistet. Die Elektrolytlösung besteht in der Regel aus einem Lithium-Salz, das in einem organischen Lösungsmittel oder Lösungsmittelgemisch gelöst ist. Derartige organische Lithium-Ionen-Zellen sind bezüglich ihrer Sicherheit kritisch, da das organische Lösungsmittel der Elektrolytlösung brennbar ist und einen niedrigen Flammpunkt besitzt, so dass eine Temperaturerhöhung innerhalb der Zelle vermieden werden muss. Dies gilt insbesondere bei Batterien für Hochstromanwendungen. Um solche Risiken zu vermeiden, werden bei Lithium-Ionen-Zellen Maßnahmen hinsichtlich der exakten Regelung der Lade- und Entladevorgänge sowie bei der Batteriekonstruktion ergriffen. Zusätzlich erfolgt häufig eine Kühlung der Batterie.

Trotz der Bemühungen im Stand der Technik, wiederaufladbare Batteriemodule für Hochstromanwendungen zu optimieren und die zum Teil gegenläufigen Forderungen zu erfüllen, besteht nach wie vor das Bedürfnis nach einem verbesserten Batteriemodul, das insbesondere folgenden Anforderungen gerecht wird:
- sehr gute elektrische Leistungsdaten, insbesondere hohe Energiedichte bei hohen entnehmbaren Strömen
- Verbesserung der Sicherheit, auch unter den besonderen Randbedingungen in einem Fahrzeug
- geringes Gewicht, um eine hohe Leistungsdichte pro Gewichtseinheit (Kilogramm) zu erzielen
- kompakter Aufbau, um möglichst viel elektrische Energie pro Volumeneinheit zur Verfügung zu stellen
- hohe mechanische Stabilität des Batteriemodulgehäuses
- geringer Preis durch kostengünstige Materialien und möglichst einfache Produktionsverfahren

Die im Stand der Technik bekannten Probleme werden erfindungsgemäß durch ein Batteriemodul mit den Merkmalen des Anspruchs 1 gelöst. Dabei wurde erkannt, dass neben der Kühlung auch das Gehäuse und seine Stabilität eine entscheidende Rolle spielen.

Erfindungsgemäß umfasst das Batteriemodul ein Batteriemodulgehäuse mit Teilen aus Kunststoff und mehrere prismatische Batteriezellen. Die Batteriezellen weisen ein Zellgehäuse mit vier bevorzugt metallenen Seitenwänden auf, von denen zwei parallele Seitenwände größer als die beiden anderen Seitenwände sind. Die Batteriezellen umfassen eine Elektrolytlösung, die bevorzugt auf SO₂ basiert. Bevorzugt enthält wenigstens die positive Elektrode ein aktives Material einer Zusammensetzung, die Lithium einschließt.

Das Batteriemodulgehäuse schließt ein Kühlsystem mit einer Kanalstruktur und einem fluiden Kühlmittel ein. Das Kühlmittel kann also sowohl ein Gas wie auch eine Kühlflüssigkeit sein. Nachfolgend wird ohne Einschränkung der Allgemeinheit des Kühlfluids der Begriff Kühlflüssigkeit verwendet. Das Batteriemodulgehäuse weist mindestens einen Kühlmitteleinlass und mindestens einen Kühlmittelauslass auf, die in Fluidverbindung mit der Kanalstruktur des Kühlsystems stehen. Bevorzugt weist das Batteriemodulgehäuse genau einen Kühlmitteleinlass und genau einen Kühlmittelauslass auf. Bevorzugt beginnt bzw. endet die Kanalstruktur am Kühlmitteleinlass bzw. Kühlmittelauslass des Gehäuses.

Das Batteriemodul ist derart aufgebaut, dass zwischen zwei benachbarten Batteriezellen eine Zwischenwand auf Kunststoff positioniert ist, die im Wesentlichen parallel zu den größeren Seitenwänden der Batteriezellen angeordnet ist. Ein Kanal der Kanalstruktur verläuft wenigstens teilweise in der Zwischenwand und ist mittels einer Ausnehmung der Zwischenwand gebildet. Die Ausnehmung der Zwischenwand ist mindestens zu einer benachbarten Seitenwand der Batteriezellen hin offen.

Zwischen der Seitenwand der Batteriezelle und der Zwischenwand ist eine Kunststofftrennschicht angeordnet. Ihr Material ist bevorzugt verschieden von dem Material der Zwischenwand. Die Dicke der Kunststofftrennschicht ist geringer als die Dicke der Zwischenwand. Die Kunststofftrennschicht ist derart angeordnet, dass der mittels der Ausnehmung gebildete Kanal des Kühlsystems in der Zwischenwand durch die Kunststofftrennschicht geschlossen ist. Auf diese Weise wird verhindert, dass in dem Kanal der Kanalstruktur fließendes Kühlmittel aus dem Kanal austritt und direkt in Kontakt mit der Seitenwand der Batteriezelle kommt, die bevorzugt aus Metall besteht. Damit wird sichergestellt, dass keine Schädigung der metallenen Seitenwand der Batteriezelle durch das Kühlmittel erfolgt. Die Auswahl des Kühlmittels kann unabhängig von ihrer Reaktion mit Metallen erfolgen.

Die Anordnung von Teilen des Kühlsystems in den Zwischenwänden hat den Vorteil, dass das Kühlmittel sehr nah an die Batteriezellen gebracht wird. Dabei ist eine großflächige Kühlung möglich, so dass die Temperatur der Batteriezellen sehr effektiv und effizient gesenkt werden kann. Die Dicke der Kunststofftrennschicht zwischen der Seitenwand der Batteriezelle und der Zwischenwand ist deshalb bevorzugt deutlich geringer als die Dicke der Zwischenwand, um einen möglichst guten Wärmeübergang von der gut wärmeleitenden Batteriezellenseitenwand zu dem fluiden Kühlmittel im Kanal der Zwischenwand zu gewährleisten.

Der Dampfdruck von Elektrolytlösungen, die auf SO₂ basieren, ist vom Anteil an SO₂, den die Elektrolytlösung enthält, und von der Temperatur abhängig. Bei Batteriezellen, die eine solche Elektrolytlösung enthalten, stellt sich das Problem, dass sich der Druck in der Batteriezelle bei Temperaturerhöhung erhöht, was zu einer Ausdehnung des Batteriezellengehäuses führt. Deshalb ist eine besonders wirkungsvolle Kühlung derartiger Batteriezellen besonders notwendig.

Auch die Ausdehnung bzw. Dickenzunahme der Elektroden während des Betriebs (engl.: Swelling) ist ein Problem von Batteriezellen wie z.B. von organischen Lithium-Polymer-Zellen. Auch bei Batteriezellen mit einer auf SO₂ basierenden Elektrolytlösung ist dieses Phänomen zu beobachten. Neben der Kühlung soll die Batteriekonstruktion auch diesem Verhalten durch die Aufnahme des inneren Drucks entgegen wirken. Dies kann beispielsweise durch eine Spannvorrichtung, ein Spannband, verstärkte Seitenwände oder Gehäusewände, wie eine verstärkte Endwand, oder durch druckstabile Zwischenwände erfolgen.

Für einen bestmöglichen Wärmeübergang ist die Dicke der Kunststofftrennschicht deutlich geringer als die Dicke der Zwischenwand. Bevorzugt beträgt die Dicke der Kunststofftrennschicht höchstens 20 % der Dicke der Zwischenwand. Im Rahmen der Erfindung wurde erkannt, dass eine Dicke der Kunststofftrennschicht von höchstens 10 %, bevorzugt höchstens 5 % der Dicke der Zwischenwand zu einem besonders guten Wärmeübergang führt. Weitere Untersuchungen haben gezeigt, dass die Dicke der Kunststofftrennschicht bevorzugt höchstens 1 mm betragen soll. Eine Kunststofftrennschicht von höchstens 0,5 mm, sehr bevorzugt höchstens 0,1 mm Dicke verbessert den Wärmeübergang weiter. Dabei hat sich auch gezeigt, dass die Kunststofftrennschicht vorzugsweise aus Polyamid bestehen sollte. Kunststoffe aus Polyamiden (PA) lassen sich sehr gut zu halbtransparenten Folien verarbeiten. Der Werkstoff zeichnet sich durch eine große Hitzebeständigkeit sowie durch elektrische Isoliereigenschaften aus. Vorzugsweise wird das Produkt Polyamid PA66 verwendet.

Vorzugsweise ist die Dicke der Zwischenwand deutlich größer als die Dicke der Kunststofftrennschicht. Bevorzugt beträgt die Dicke der Zwischenwand höchstens 20 mm, besonders bevorzugt höchstens 10 mm und weiter bevorzugt höchstens 7 mm. Untersuchungen haben gezeigt, dass die Dicke der Zwischenwand bevorzugt weiter reduziert werden kann, so dass sie bevorzugt höchstens 5 mm, besonders bevorzugt höchstens 4 mm beträgt. Insbesondere ist eine Dicke von 3 mm bevorzugt. Eine Reduzierung der Zwischenwanddicke auf weniger als 1 mm ist in der Regel nicht sinnvoll. Je dünner die Zwischenwand realisiert werden kann, desto höher ist die Packdichte innerhalb des Batteriemoduls, d. h. bei dünneren Zwischenwänden können in dem gleichen Volumen mehr Batteriezellen in einem Batteriemodulgehäuse zusammengefasst werden. Eine dünne Zwischenwand führt folglich zu einer besseren Ausnutzung des Volumens des Batteriemodulgehäuses.

Allerdings kann die Zwischenwand nicht beliebig dünn werden, da sie zum einen den auftretenden Kräften, insbesondere bei Batteriezellen, die auf SO₂ basieren, standhalten müssen. Außerdem muss gewährleistet sein, dass genügend Kühlfluid transportiert werden kann, um eine geforderte Wärmeleistung zu realisieren. Hierzu kann der im Querschnitt abgerundete oder eckige Kanal unterschiedliche Querschnitte aufweisen. Beispielsweise sollten bevorzugt mindestens ein Liter Kühlflüssigkeit pro Minute fließen können, sehr bevorzugt ist eine Fließgeschwindigkeit von mindestens 1,5 l/min, weiter bevorzugt von mindestens 1,6 l/min. Dazu muss die Kanalstruktur in der Zwischenwand entsprechend ausgebildet sein. Untersuchungen an einem Batteriemodul mit 12 Zellen, die in zwei Reihen angeordnet sind, haben beispielsweise ergeben, dass eine Fließgeschwindigkeit von mindestens 2,25 l/min besonders vorteilhaft ist. Allgemein wurde im Rahmen der Erfindung erkannt, dass eine Fließgeschwindigkeit von mindestens 0,125 l/min pro Batteriezelle vorteilhaft ist, besonders bevorzugt eine Fließgeschwindigkeit von mindestens 0,18 l/min pro Batteriezelle.

Das Fluid dient zum Wärmetransport zur oder von der Oberfläche der Batteriezellen. Die Art des Fluids (gasförmig, flüssig, Wärmekapazität), die Einlasstemperatur und die Fließgeschwindigkeit müssen dem Wärmehaushalt der Batteriezelle angepasst werden. Der Wärmehaushalt hängt ab von der elektrischen Belastung, der Zellgeometrie und den Wärmekapazitäten der verwendeten Zellmaterialien. Bei geringer elektrischer Belastung kann die Zelle mittels eines gasförmigen Kühlmediums, z.B. Luft, gekühlt werden. Bei hohen Belastungen ist die Kühlung mit einem flüssigen Kühlmedium bevorzugt.

Bevorzugt ist die Zwischenwand aus Kunststoff, besonders bevorzugt aus einem dunkelfarbigen Kunststoff, wie z.B. PA6T/6I. Die Kunststofftrennschicht, die bevorzugt aus einer halbtransparenten PA66-Folie besteht, kann dann mittels eines Laserschweißverfahrens auf die Zwischenwand aufgeschweißt werden. Die Kunststofftrennschicht und die Zwischenwand werden derart miteinander verbunden, dass die offenen Seiten der Ausnehmungen in der Zwischenwand verschlossen sind, bevorzugt je nach Art des Fluids flüssigkeitsdicht und/oder gasdicht verschlossen.

In einer bevorzugten Ausgestaltung des erfindungsgemäßen Batteriemoduls ist der Kunststoff der Zwischenwand thermoplastisch. Die Zwischenwand lässt sich dann im Spritzgießverfahren herstellen, so dass die Kanäle der Kanalstruktur in nahezu beliebigen Formen direkt in die Zwischenwand eingearbeitet werden können.

Die Ausnehmung kann bevorzugt mäanderförmig in der Zwischenwand ausgebildet werden. Der Mäander erstreckt sich von einem unteren Bereich der Zwischenwand bis in einen oberen Bereich. Auf diese Weise wird eine relativ große Kühlfläche erzeugt, die an die Seitenwand der Batteriezellen grenzt und von Kühlmittel durchflossen ist. Dennoch bleibt die Stabilität der Zwischenwand erhalten.

Besonders bevorzugt weist der Mäander des Kanals in Flussrichtung des Kühlmediums enger werdende Mäanderschlaufen auf. Bevorzugt sind die Mäanderschlaufen im oberen Bereich der Zwischenwand enger, so dass die für einen Wärmeübergang zur Verfügung stehende Fläche nach oben hin erhöht wird. Dadurch kann auch im oberen Bereich eine gute Kühlung erzielt werden, wenn das Kühlmittel auf seinem Weg in Flussrichtung schon erwärmt wurde, da es im unteren Bereich der Zwischenwand bereits Wärme von den benachbarten Batteriezellen aufgenommen hat. Durch geeignete Wahl der Anzahl, der Länge und des Abstands der Mäanderschlaufen lässt sich eine gute und gleichmäßige Kühlung der Batteriezellen über ihre gesamte Seitenfläche erzielen.

In einer bevorzugten Ausführungsform ist in der Zwischenwand eine Ausnehmung der Kanalstruktur vorgesehen, die sich über die gesamte Dicke der Zwischenwand erstreckt. Die Ausnehmung bildet einen beidseitig offenen Kanal, der zu den beiden benachbarten Seitenwänden der Batteriezellen hin offen ist. Somit erfolgt eine effiziente Kühlung beider benachbarter Batteriezellen.

In einer alternativen, sehr bevorzugten Ausführungsform ist die Ausnehmung der Kanalstruktur als einseitig offener Kanal ausgebildet und nur zu einer der benachbarten Batteriezellen hin offen. Bevorzugt umfasst die Zwischenwand eine zweite Ausnehmung der Kanalstruktur, die einen weiteren einseitig offenen Kanal bildet, der zu der gegenüberliegenden Längsseite der Zwischenwand offen ist. Bevorzugt sind die zwei jeweils zu gegenüberliegenden Seiten hin offenen Kanäle versetzt zueinander angeordnet. Diese Kanäle können ebenfalls beide mäanderförmig ausgebildet sein.

In einer besonderen Ausführungsform des erfindungsgemäßen Batteriemoduls ist der in Fluidverbindung mit dem Kanal in der Zwischenwand stehende Kühlmitteleinlass unterhalb des Kühlmittelauslasses angeordnet. Besonders bevorzugt ist der Kühlmitteleinlass in der unteren Hälfte des Batteriemodulgehäuses positioniert. Besonders bevorzugt weist der Kühlmitteleinlass und/oder der Kühlmittelauslass eine Schnellkupplung auf. Sie ermöglicht ein einfaches und werkzeuglos betätigbares Anschließen des Batteriemoduls an ein externes Kühlsystem. Eine derartige Schnellkupplung kann beispielsweise ähnlich den gängigen Druckluftanschlüssen ausgebildet sein. Sowohl die Schnellkupplung als auch das an einem Schlauch angeordnete Gegenstück sind bevorzugt aus Metall und lassen sich durch einfaches Ineinanderstecken dichtend miteinander verbinden. Im praktischen Einsatz sind ein schneller Austausch und eine einfache Montage des Batteriemoduls möglich. Da kein spezielles Werkzeug vorgesehen ist, kann das Kühlsystem leicht abgekoppelt werden. Eine weitere Möglichkeit einer Schnellkupplung ist beispielsweise eine Schnellkupplung KV2 von SMC Corporation of America oder eine Ausführung ähnlich eines Bajonettverschlusses. Die Schnellkupplung ist stets werkzeuglos zu bedienen und erfordert kein Verschrauben über mehrere Gewindegänge.

In einer bevorzugten Ausführungsform ist der Kunststoff der Batteriemodulgehäuseteile faserverstärkt, besonders bevorzugt glasfaserverstärkt. Als besonders bevorzugt hat sich ein glasfaserverstärkter Polyamid erwiesen. Ein bevorzugtes Material ist beispielsweise das Polyamid PA 6T/6I. Derartige Materialien erfüllen die Forderung nach einem leichten, nicht leitenden beständigen Gehäusematerial sehr gut. Sie haben ein geringes Gewicht bei einer gleichzeitig sehr hohen Stabilität. Durch die glasfaserverstärkten Kunststoffe werden die mechanischen Eigenschaften nochmals erhöht, so dass insbesondere die sogenannte Impact-Strength deutlich verbessert wird, was zu einer Erhöhung der Sicherheit beim Einsatz in Fahrzeugen führt. Im Falle eines Zusammenstoßes oder Unfalls, beispielsweise bei einem Frontalcrash, wird diese Batterie meist nicht beschädigt, insbesondere bleiben die in dem Batteriemodulgehäuse umfassten Batteriezellen in der Regel unversehrt.

Daneben hat das glasfaserverstärkte Polyamid den Vorteil, dass es nicht nur Schutz gegen Kräfte von außen, sondern auch gegen die bei Batteriezellen, die insbesondere auf SO₂ basieren, auftretenden internen Drücke bietet. Da sich derartige Batteriezellen während des Lade- und Entladevorgangs erwärmen und ausdehnen, bietet ein glasfaserverstärktes Batteriemodulgehäuse gleichzeitig auch eine mechanische Stabilität gegenüber diesen Drücken, so dass das Gehäuse die entsprechenden Kräfte wenigstens teilweise aufnehmen kann.

Die Steifigkeit und Stabilität des Batteriemodulgehäuses wird bevorzugt auch dadurch erhöht, dass die Endwände des Batteriemodulgehäuses mit einer rippenartigen Struktur versehen sind. Die Vorderwand und die Rückwand, die im Wesentlichen parallel zu den größeren Seitenwänden der Batteriezellen angeordnet sind, weisen bevorzugt Quer- und/oder Längsstreben auf. Sie können beispielsweise sich horizontal und vertikal an der Außenseite der Wände erstreckende Rippen sein und eine netzartige Versteifungsstruktur bilden.

Um die Aufnahme von ausgeübten Drücken weiter zu verbessern, werden in einer bevorzugten Ausführungsform des erfindungsgemäßen Batteriemoduls mehrere Batteriezellen und die dazwischen angeordneten Zwischenwände von einer Spannvorrichtung umfasst. Bevorzugt ist die Spannvorrichtung aus Metall. Die Spannvorrichtung unterstützt das glasfaserverstärkte Gehäuse, um ein Ausdehnen der Batteriezellen und somit des gesamten Batteriemoduls zu verhindern.

Besonders bevorzugt schließt die Spannvorrichtung ein Spannband, insbesondere ein Metall-Spannband ein. Es ist leicht zu montieren und leicht zu handhaben und weist gleichzeitig ein relativ geringes Gewicht auf. Darüber hinaus ist ein Spannband flexibel und an verschiedene Gehäuseformen anpassbar, was insbesondere bei einem modularen Aufbau des Batteriemoduls vorteilhaft ist. Besonders bevorzugt wird das Spannband laserverschweißt, so dass die beiden Enden das Band verschließen. Die Enden können sich überlappen, so dass eine ausreichend große Fläche zum Verschweißen entsteht. In einer weiter bevorzugten Ausführungsform wird das Spannband mittels eines selbsthaltenden Schnellverschlusses verschlossen. Als besonders bevorzugt hat sich ein selbstrastender Schnellverschluss erwiesen, so dass das Spannband auf einfache Weise manuell oder mittels eines Werkzeugs, wie beispielsweise einer Spannzange gespannt werden kann.

Wenn die Batteriezellen in dem Batteriemodul in zwei Reihen (Stapel) angeordnet sind, kann je ein Spannband eine Reihe der Batteriezellen sowie die entsprechenden Gehäuseteile umgreifen. Bevorzugt weist das Batteriemodulgehäuse eine Durchgangsausnehmung zwischen den Batteriezellreihen (Stapel) auf, durch die das Spannband hindurchgeführt wird. Das Spannband kann auch zweifach durch die Durchgangsausnehmung geführt werden, z. B. in Form einer Acht. So können beide Reihen mit einem Band umspannt werden. Zusätzlich kann ein weiteres Spannband um das gesamte Batteriemodul gespannt sein.

In einer bevorzugten Ausführungsform ist das Batteriemodul modular aufgebaut. Da das Batteriemodul je nach geforderter Leistungsdichte und Spannungsniveau mehrere zusammengeschaltete Batteriezellen einschließt, variiert die Größe des Batteriemodulgehäuses in Abhängigkeit der Anzahl der Batteriezellen. Bevorzugt weisen deshalb die Zwischenwände an ihren kurzen seitlichen Stirnseiten je eine Zwischenwandseitenwand auf, die die kleinen Seitenwände des Batteriezellgehäuses wenigstens teilweise überragen. Bevorzugt bilden die Zwischenwandseitenwände gemeinsam mit anderen Zwischenwänden und deren Zwischenwandseitenwänden eine Batteriemodulgehäuseseitenwand. Besonders bevorzugt korrespondieren die jeweiligen Zwischenwandseitenwände miteinander, so dass sie ineinander greifen und besonders bevorzugt miteinander verrasten.

In einer ebenfalls bevorzugten Ausführungsform weist die Zwischenwand einen Zwischenwandboden auf, der wenigstens teilweise unter die Batteriezellen ragt und gemeinsam mit anderen Zwischenwandböden bevorzugt den Boden des Batteriemodulgehäuses bildet. Bevorzugt korrespondieren die Zwischenwandböden derart miteinander, dass sie ineinander greifen und besonders bevorzugt miteinander verrasten. Auf diese Weise können durch Hinzufügen weiterer Zwischenwände sowohl der Boden als auch die Seitenwände des Batteriemodulgehäuses vergrößert werden. Es ist nur ein Bauelement, nämlich die Zwischenwand, notwendig, um sowohl den Boden wie auch die Seitenwand des Batteriemodulgehäuses zu verlängern. Durch die korrespondierende Form ist eine einfache Montage möglich. Gleichzeitig werden durch die miteinander verrastenden Zwischenwände die dazwischen liegenden Batteriezellen gehalten. Die Stabilität des Batteriemodulgehäuses wird weiter erhöht.

Ein derartiges erfindungsgemäßes Batteriemodul wird bevorzugt in einem Kraftfahrzeug verwendet, da sie in verbesserter Weise die im Stand der Technik geforderten Anforderungen erfüllt. Zum einen erfolgt eine optimierte Kühlung der Batteriezellen, um eine Temperaturerhöhung der Zellen zu vermeiden. Zum anderen bietet sie eine erhöhte Stabilität und Sicherheit. Da die Kühlung ein starkes Ansteigen der Batterietemperatur verhindert, wird auch eine Ausdehnung der Batteriezellen mit auf SO₂ basierender Elektrolytlösung reduziert oder verhindert. Um dennoch eventuell entstehende Kräfte aufzufangen, ist das Batteriemodulgehäuse glasfaserverstärkt. Die Verrastung der Zwischenwände erhöht die Stabilität und gibt die Möglichkeit, die während des Betriebs entstehenden Kräfte aufzunehmen. Zusätzlich kann eine Spannvorrichtung, beispielsweise in Form eines Spannbandes vorgesehen sein. Dennoch ist das Batteriemodul insgesamt nicht nur sehr stabil, sondern weist auch ein recht geringes Gewicht auf. Durch die Verwendung der ein- oder beidseitig offenen Ausnehmungen in der Zwischenschicht und dem Abdichten der dadurch entstehenden Kanäle mittels der dünnen Kunststofftrennschicht wird der Platz innerhalb des Batteriemodulgehäuses bestmöglich ausgenutzt, so dass die Leistungsdichte pro Volumeneinheit deutlich erhöht werden kann. Dies erfolgt bei gleichzeitiger Erhöhung der Leistungsdichte pro Gewicht.

Die Erfindung wird nachfolgend anhand von in den Figuren dargestellten besonderen Ausführungsformen näher erläutert. Die dort dargestellten Besonderheiten können einzeln oder in Kombination verwendet werden, um bevorzugte Ausgestaltungen der Erfindung zu schaffen. Die beschriebenen Ausführungen stellen keine Einschränkung der durch die Ansprüche in ihrer Allgemeinheit definierten Erfindung dar.

Es zeigen:
- Fig. 1: das erfindungsgemäße Batteriemodul in einer Gesamtansicht mit abgehobenem Deckel;
- Fig. 2a - 2c: eine Zwischenwand, die zwischen zwei benachbarten Batteriezellen angeordnet ist;
- Fig. 3: eine Rückwand des Batteriemodulgehäuses des Batteriemoduls aus Figur 1;
- Fig. 4: eine Vorderwand des Batteriemodulgehäuses des Batteriemoduls aus Figur 1;
- Fig. 5: eine Gesamtansicht der Batterie mit Deckel;
- Fig. 6a - 6e: die verschiedenen Stufen im Herstellungsprozess;
- Fig. 7: eine Abdeckplatte des Batteriemoduls.

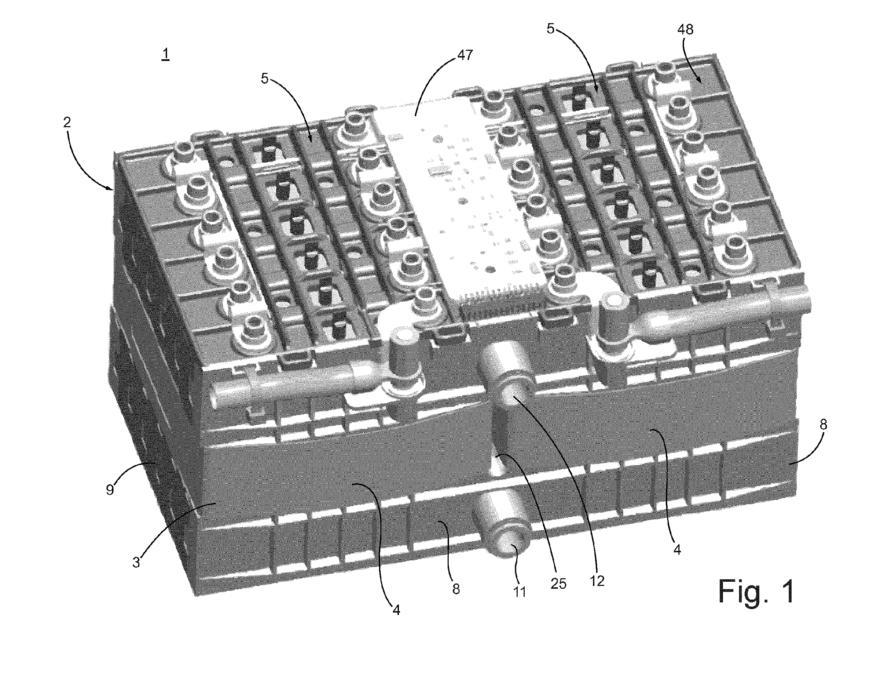

Figur 1 zeigt die Gesamtansicht eines erfindungsgemäßen Batteriemoduls 1 ohne Deckel. Das Batteriemodul 1 umfasst ein Batteriemodulgehäuse 2, das mit einer Spannvorrichtung 3 umschlossen ist. Die Spannvorrichtung 3 schließt zwei Spannbänder 4 aus Metall ein.

Das Batteriemodul 1 umfasst mehrere prismatische Batteriezellen 5. Sie sind hier von einer Abdeckplatte 48 nach oben abgedeckt, wobei die elektrischen Anschlüsse durch entsprechende Öffnungen herausragen. In der Mitte der Abdeckplatte ist eine Batteriemodulsteuerelektronik 47 zur Steuerung des Batteriemoduls 1 optional angeordnet.

Die Batteriezellen 5 sind in zwei Reihen angeordnet. In jeder Reihe sind sechs Batteriezellen 5 angeordnet, die elektrisch so miteinander verschaltet sind, dass mit den insgesamt zwölf Batteriezellen eine Nominalspannung von 38,4 V erzielt wird.

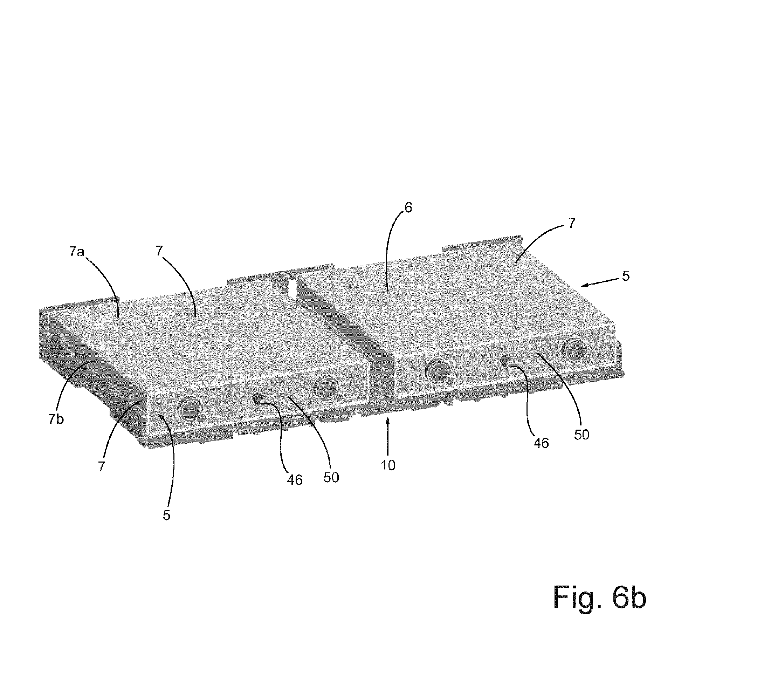

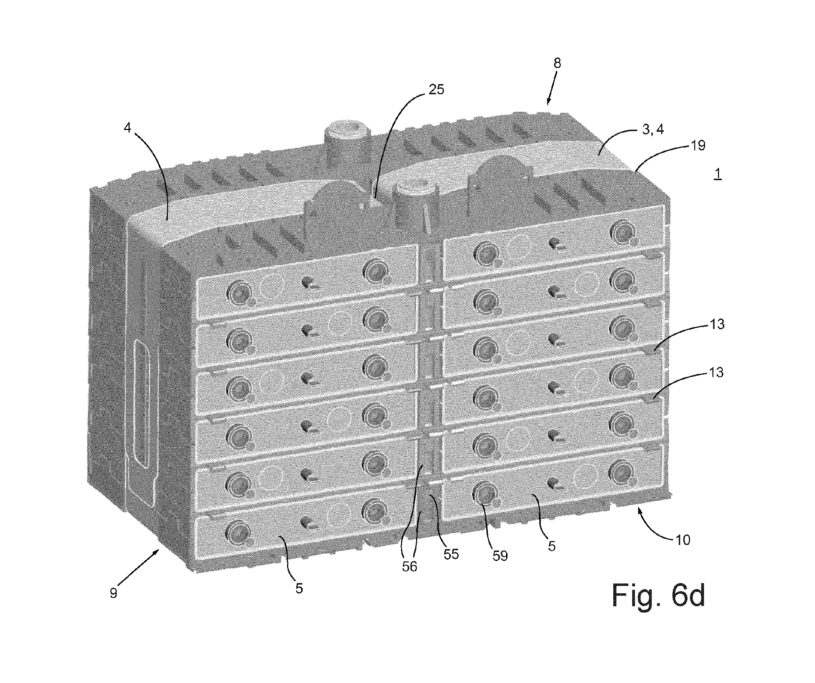

Die Batteriezellen 5, die in Figur 6b oder 6d genauer gezeigt sind, weisen ein Zellgehäuse 6 mit vier Seitenwänden 7 auf. Zwei parallele Seitenwände 7a, die im Folgenden als Längswand bezeichnet werden, sind größer als die anderen Seitenwände 7b, die als Stirnwand bezeichnet sind. Bevorzugt sind die Flächen der größeren Seitenwände 7a der Batteriezelle 5 wenigstens viermal so groß wie die Flächen der anderen Seitenwände (Stirnseitenwand 7b). Besonders bevorzugt sind die Flächen der Längswände 7a wenigstens fünfmal so groß wie die Stirnwände 7b.

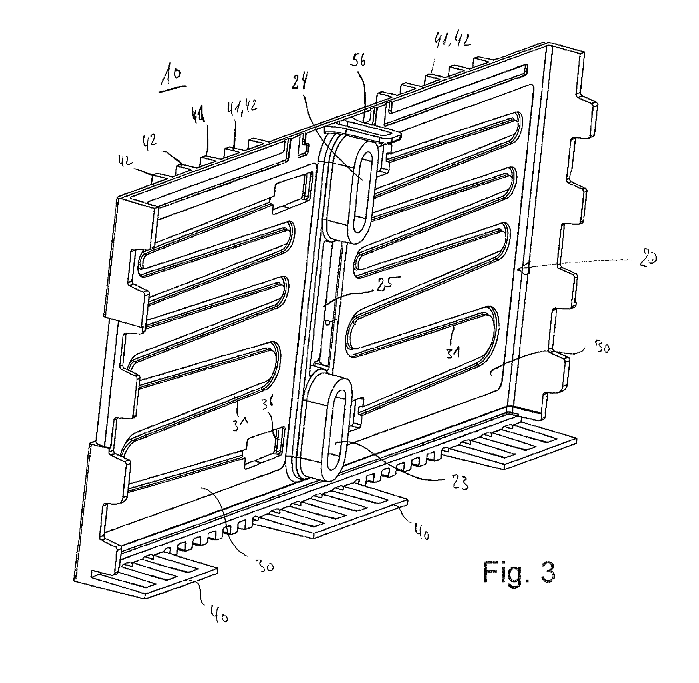

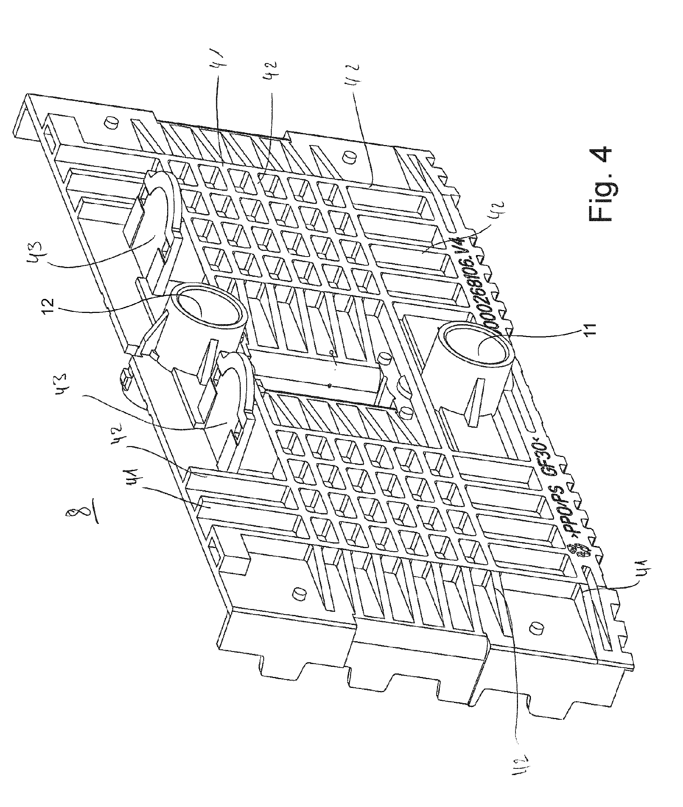

Das Batteriemodulgehäuse 2 besteht aus mehreren Teilen aus Kunststoff und schließt eine Vorderwand 8 (Figur 4), zwei Batteriemodulgehäuseseitenwände 9 sowie eine Rückwand 10 mit einer rippenartigen Struktur aus mehreren Quer- und Längsstegen (Figur 3) ein. Das Batteriemodulgehäuse 2 umfasst ein Kühlsystem mit einer Kanalstruktur und einem fluiden, bevorzugt flüssigen Kühlmittel. Die hier nicht gezeigte Kanalstruktur steht in Fluidverbindung mit einem Kühlmitteleinlass 11 und einem Kühlmittelauslass 12 des Batteriemodulgehäuses 2, die jeweils in der Vorderwand 8 angeordnet sind.

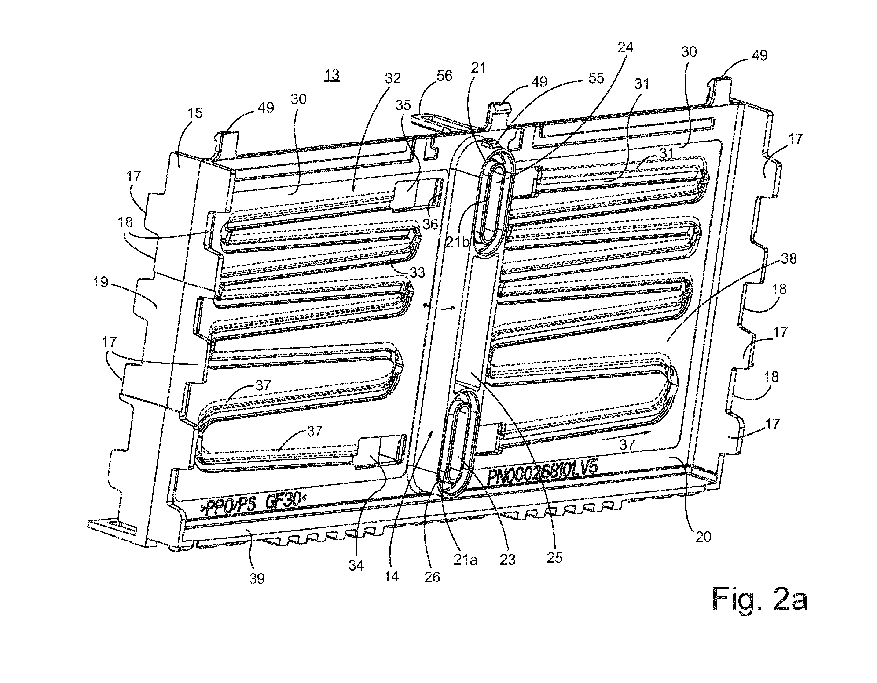

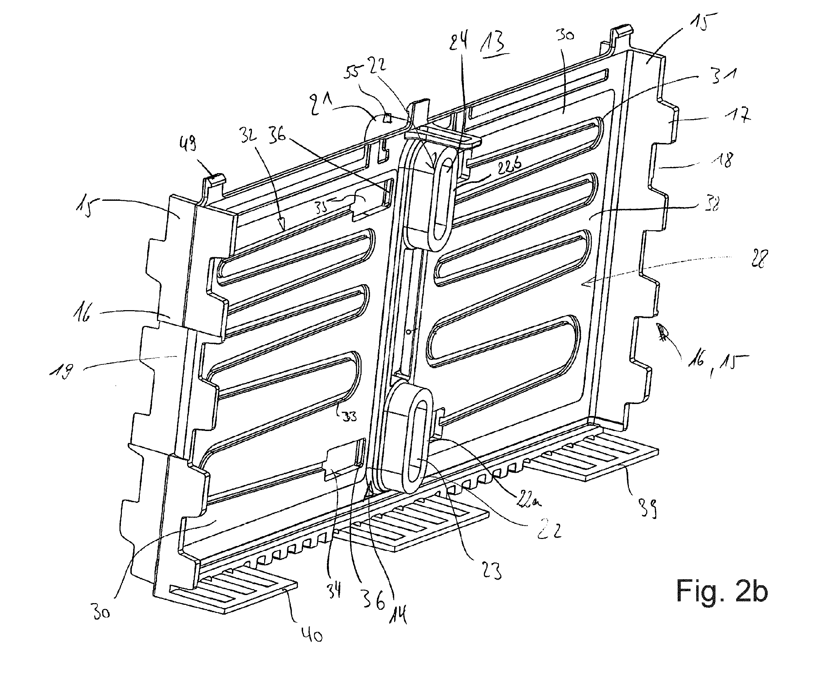

Innerhalb des Batteriemodulgehäuses 2 sind die Batteriezellen 5 so positioniert, dass zwischen zwei mit ihren Längsseiten 7a benachbarten Batteriezellen 5 je eine Zwischenwand aus Kunststoff, bevorzugt aus einem thermoplastischen Kunststoff, angeordnet ist (Fig. 2a, 2b). Die Zwischenwand 13 ist parallel zu den größeren Seitenwänden (Längswand 7a) der Batteriezellgehäuse 6 angeordnet.

Die Figuren 2a und 2b zeigen die Zwischenwand 13 im Detail. Sie ist bevorzugt symmetrisch aufgebaut, um jeweils zwei Batteriezellen 5 auf jeder Seite zu umgreifen. Selbstverständlich sind auch unsymmetrische Zwischenwände möglich, wenn die Batteriezellen nur in einer Reihe angeordnet sind oder die Zuführungen für das Kühlfluid außermittig erfolgen, z.B. seitlich. Dabei werden die Batteriezellen 5 zwischen einem Mittelteil 14 und je einer Zwischenwandseitenwand 15 eingefasst, die an der Stirnseite 16 der Zwischenwand 13 angeordnet ist. Diese bevorzugte Zwischenwand 13 trennt also insgesamt vier benachbarte Batteriezellen 5 voneinander.

Bevorzugt ist die Zwischenwandseitenwand 15 konturiert ausgebildet, so dass sie mit den Zwischenwandseitenwänden 15 benachbarter Zwischenwände 13 korrespondieren und ineinander greifen können. Die Zwischenwandseitenwand 15 überragt dabei die benachbarten Batteriezellen 5 teilweise. Sie weist bevorzugt eine zinnenartige Struktur auf, die mehrere Zinnen 17 umfasst. Die Zinnen 17 an einem Ende der Zwischenwandseitenwand 15 korrespondiert mit den zwischen den Zinnen 17 gebildeten Rücksprüngen 18 am anderen Ende der Zwischenwandseitenwand 15, so dass zwei benachbarte Zwischenwände 13 ineinandergreifen können. Die Zinnen 17 und Rücksprünge 18 könnten optional zusätzlich Rastelemente umfassen, um eine Verrastung der Zwischenwände 13 zu ermöglichen und die Stabilität des Gehäuses weiter zu erhöhen.

Die Zwischenwandseitenwand 15 ist in drei Teile unterteilt, wobei ihre Dicke im mittleren Teil gegenüber der Dicke im oberen und unteren Teil der Zwischenwandseitenwand 15 reduziert ist. Hierdurch wird eine Führung 19 für das Spannband 4 gebildet.

Das Mittelteil 14 auf der in Figur 2a gezeigten Vorderseite 20 ist in Form einer kragenartigen Buchse 21 ausgebildet, die mit einem Stecker 22 auf der Rückseite 28 der Zwischenwand 13 korrespondiert (Figur 2b). Die Buchse 21 schließt einen Verteilkanal 23 an seinem unteren Ende und einen Sammelkanal 24 sowie eine zwischen den beiden Kanälen 23, 24 angeordnete Durchgangsausnehmung 25 ein. Beim Zusammenbau des Batteriemodulgehäuses 2 werden mehrere benachbarte Zwischenwände 13 so zusammengebracht, dass die Steckteile des Verteilkanals 23 und des Sammelkanals 24 auf der Rückseite 28 der Zwischenwand 13 in die Buchsenteile des Verteilkanals 23 bzw. des Sammelkanals 24 eingesteckt werden. Die in Figur 2b gezeigten Steckerwände 22a und 22b korrespondieren mit den zwischen den Kanalwänden 21a und 21b und dem Kragen 26 des Mittelteils 14 gebildeten Zwischenräumen. Auf diese Weise können die Kanäle des Kühlsystems 27 verlängert werden, wobei die Buchse 21 und der Stecker 22 dichtend ineinander passen.

Die Zwischenwand 13 weist auf der Vorderseite 20 und der Rückseite 28 je zwei Kühlbereiche 30 auf, die jeweils zwischen dem Mittelteil 14 und den Zwischenwandseitenwänden 15 angeordnet sind. In dem Kühlbereich ist ein Kanal 31 der Kanalstruktur 32 angeordnet, die Teil des Kühlsystems 27 des Batteriemodulgehäuses 2 ist. Der Kanal 31 wird mittels einer Ausnehmung 33 der Zwischenwand 13 gebildet. In der hier gezeigten bevorzugten Ausführungsform ist die Ausnehmung 33 als einseitig offener Kanal 31 ausgebildet, wobei der Kanal 31 jeweils zur benachbarten Batteriezelle hin offen ist.

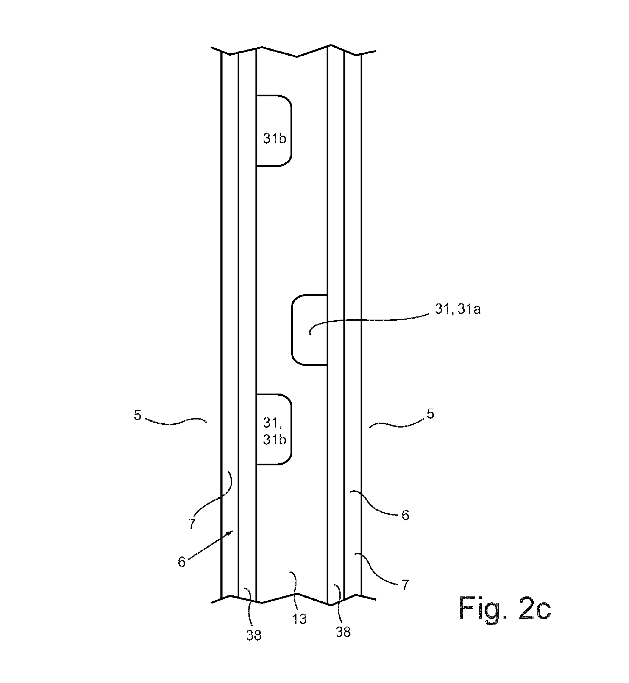

Sowohl auf der Vorderseite 20 wie auch auf der Rückseite 28 der Zwischenwand 13 sind je ein einseitig offener Kanal 31 angeordnet. Die Kanäle 31 weisen am vorderen Ende 34 eine Verbindung zum Verteilkanal 23 und an ihrem hinteren Ende 35 eine Verbindung zum Sammelkanal 24 auf. In der gezeigten Ausführung gemäß Figur 2 sind am vorderen und am hinteren Ende 34, 35 jeweils Aufweitungen gezeigt, die lediglich fertigungstechnische Gründe haben. An den Enden 34, 35 des Kanals 31 ist in der Aufweitung je eine Durchführung 36 angeordnet, die die Fluidverbindung zum Verteilkanal 23 bzw. zum Sammelkanal 24 herstellt. Eine Durchführung 36 wird also von den beiden Kanälen 31 verwendet, die im jeweiligen Kühlbereich 30 auf der Vorderseite 20 und Rückseite 28 angeordnet sind.

Die Kanäle 31 sind jeweils mäanderförmig und haben mehrere Mäanderschlaufen. Der Kanal 31 auf der Vorderseite 20 ist gegenüber dem Kanal 31 auf der Rückseite 28 leicht nach unten versetzt, wobei sich die beiden Kanäle 31 an den Wendepunkten der Mäanderschlaufe kreuzen. Eine Verbindung der beiden Kanäle 31 an den Mäanderschlaufen ist nicht schädlich. Sie führt lediglich zu einer Durchmischung der Kühlflüssigkeit, die Flussrichtung bleibt aber erhalten.

Die Kanäle 31 sind derart ausgebildet, dass die Mäanderschlaufen von unten nach oben hin enger werden und somit enger in Flussrichtung (Pfeil 37) des Kühlmittels. Die noch unverbrauchte Kühlflüssigkeit aus dem Verteilkanal 23 fließt am vorderen Ende 34 in den Kanal 31 ein. Die Wärmeableitung aus den Batteriezellen ist hier sehr gut. Mit fortlaufender Flussrichtung nimmt die Kühlwirkung des Kühlmittels ab, was durch die engeren Mäanderschlaufen des Kanals 31 kompensiert wird, so dass über den gesamten Kühlbereich 30 eine gleichmäßige Kühlung erfolgt.

Die Kühlbereiche 30 der Zwischenwand 13 werden mit einer Kunststofftrennschicht 38 aus Polyamid abgedeckt. Bevorzugt ist sie eine transparente PA66-Folie und mittels Laser auf die Kühlbereiche 30 aufgeschweißt. Um das Laserschweißen zu optimieren, ist die Zwischenwand 13 bevorzugt aus einem dunklen Kunststoff hergestellt.

Den Figuren 2a und 2b ist zu entnehmen, dass die Zwischenwand 13 einen Zwischenwandboden 39 aufweist, der an der Rückseite 28 der Zwischenwand 13 drei konturierte Laschen 40 umfasst. Diese Laschen 40 greifen mit Rastnoppen unter die benachbarte Zwischenwand 13, so dass die Zwischenwände 13 miteinander verrasten. An der Oberseite der Zwischenwand 13 erstreckt sich an der Rückseite 28 eine Rastzunge 56, die oberhalb des Mittelteils 14 angeordnet ist. Die Rastnase 55 und die Rastzunge 56 benachbarter Zwischenwände greifen ineinander und halten die Wände 13 in ihrer Position. Durch den modularen Aufbau des Batteriemodulgehäuses 2 ist nicht nur eine große Flexibilität und einfache Erweiterbarkeit gegeben, gleichzeitig wird eine hohe Stabilität erzeugt, da die einzelnen Zwischenwände 13 miteinander verrasten können.

Figur 2c zeigt eine Detailzeichnung eines Schnitts durch den Kühlbereich 30 der Zwischenwand 13. Neben der Zwischenwand 13 sind auch die Kunststofftrennschichten 38 sowie die Seitenwände 7 der Zellgehäuse 6 der benachbarten Batteriezellen 5 gezeigt.

Deutlich zu erkennen ist, dass die beiden einseitig offenen Kanäle 31 a, 31 b der Kanalstruktur 32 in der Zwischenwand 13 versetzt zueinander angeordnet sind. Der Ausschnitt in Figur 2c zeigt die Kanäle im oberen Bereich des Kühlbereichs 30, in dem die Mäanderschlaufen bereits eng beieinander liegen. Die Kanäle 31 a, 31 b sind jeweils an ihrer offenen Seite von der Trennschicht 38 abgedeckt und verschlossen. Die Kunststofftrennschicht 38 weist eine wesentlich geringere Dicke auf als die Zwischenwand 13. Dadurch ist ein guter Wärmeübergang von der Batteriezellenseitenwand 7 zu dem Kühlmittel im Kanal 31 gegeben.

Figur 3 zeigt die Rückwand 10 des Batteriemodulgehäuses 2. Sie ist im Aufbau der Zwischenwand 13 ähnlich. Ihre Vorderseite 20 entspricht der Vorderseite 20 einer Zwischenwand 13. Die Rückwand 10 hat eine Durchgangsausnehmung 25 für eine Spannvorrichtung oder ein Spannband, dass sich durch die entsprechende Ausnehmung der Zwischenwände 13 erstreckt. Allerdings ist in der Rückwand 10 in jedem Kühlbereich 30 jeweils nur ein Kanal 31 vorhanden. Der Kanal 31 ist zur Innenseite der Rückwand 10 hin offen. Er ist mit einer Kunststofftrennschicht 38 seitlich verschlossen. Die Dicke der Rückwand 10 ist deshalb bevorzugt geringer als die Dicke der Zwischenwand 13. Der Verteilkanal 23 und der Sammelkanal 24 für die Kühlflüssigkeit sind je als Endstück ausgebildet und haben keine Durchgangsbohrung wie in den Zwischenwänden. Die Kühlflüssigkeit gelangt von dem Verteilkanal 23 lediglich in die beiden Kanäle 31 der Rückwand 10 und von dort in den Sammelkanal 24.

An der Außenseite weist die Rückwand 10 mehrere Verstärkungen 41 in Form von Quer- und Längsstreben auf. Die Querstreben sind bevorzugt als vertikalen Rippen 42 ausgebildet. Die Verstärkungen 41 an der Außenseite der Rückwand 10 entsprechen bevorzugt den Verstärkungen 41 an der Vorderwand 8, die in Figur 4 gezeigt ist. Diese Verstärkungen 41 sind in dieser Ausführung als vertikale und horizontale Rippen 42 über die Außenseite der Wand 8 verteilt und wirken Verformungen entgegen. Sie dienen gleichzeitig der Druckaufnahme, um im Inneren des Batteriemodulgehäuses 2 entstehende Drücke aufzunehmen und die Stabilität des Gehäuses zu erhöhen. Optional sind die Endwände (Vorderwand 8 und Rückwand 10) stärker ausgebildet als die Zwischenwände 13, wenn hohe Drücke und eine große Stabilität gefordert ist.

Die Vorderwand 8 hat einen ähnlichen Aufbau wie die Rückwand 10. Auch sie weist nur Kanäle 31 in einer Ebene auf, nämlich an ihrer Innenseite. Die Kanäle 31 sind bevorzugt zur Innenseite hin offen und werden wie die Kanäle 31 in den Zwischenwänden 13 mit einer Kunststofftrennschicht 38 seitlich verschlossen. Es sind keine zwei in der Dicke der Wand 8 nebeneinander liegende Kanäle 31 angeordnet.

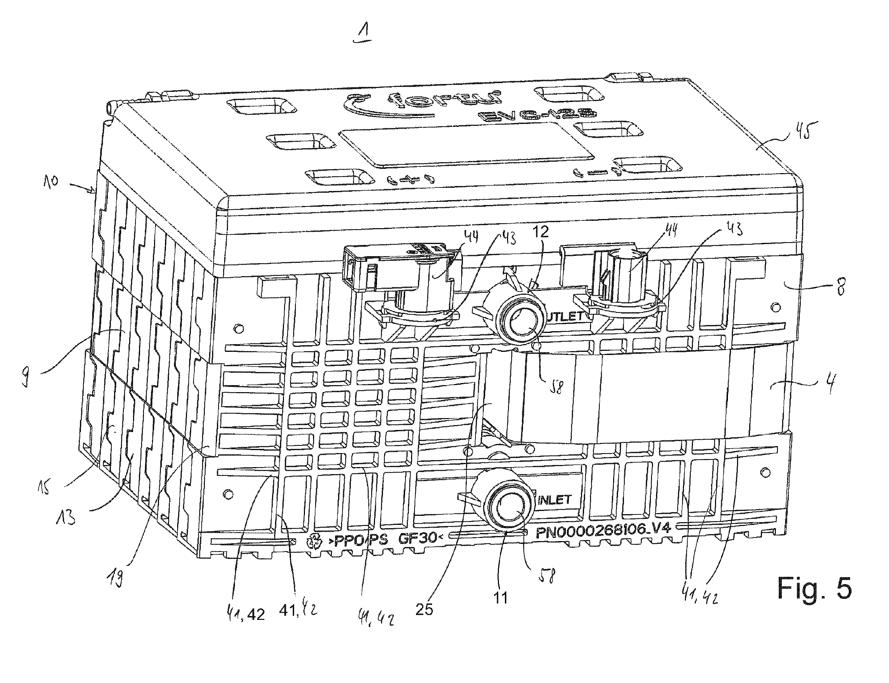

Ebenso wie die Rückwand 10 hat auch die Vorderwand 8 eine Durchgangsausnehmung 25 für ein Spannband 4. Gegenüber der Rückwand 10 weist die Vorderwand 8 an der Außenseite zusätzlich den Kühlmitteleinlass 11 sowie den Kühlmittelauslass 12 auf. In einer bevorzugten Ausführungsform umfassen der Kühlmitteleinlass 11 und der Kühlmittelauslass 12 eine Schnellkupplung 58, wie sie auch in Figur 5 zu sehen ist. Die Schnellkupplung 58 dient zum einfachen, werkzeuglos betätigbaren Anschluss an ein externes Kühlsystem mit einem Kühlschlauch. Durch die geeignete Materialwahl des Kühlsystems einschließlich der Vorderwand 8, der Rückwand 10 und der Zwischenwand 13 ist es möglich, die Kühlung nicht nur mit Wasser, sondern mit einer anderen Kühlflüssigkeit zu betreiben, z.B. mit Wasser-Glykol-Mischungen. Beispielsweise kann bei der Verwendung des Batteriemoduls im Fahrzeug das für andere Kühlzwecke, wie beispielsweise die Klimaanlage, verwendete Kühlmittel eingesetzt werden. Möglich ist auch die Verwendung gasförmiger Kühlmedien; es kann z.B. Luft oder auch SO₂ verwendet werden.

In den Figuren 4 und 5 ist zu erkennen, dass die Vorderwand 8 zwei Aufnahmen 43 aufweisen, an denen die elektrischen Anschlüsse 44 angeordnet sind. Diese werden von einer Abdeckung geschützt.

In Figur 5 ist aus Gründen der Veranschaulichung das Batteriemodul 1 mit nur einem Spannband 4 gezeigt, das eine Reihe von Batteriezellen 5 und die entsprechenden Gehäuseteile umschließt. Das Spannband 4 ist durch die Durchgangsausnehmung 25 zwischen den Batteriezellreihen geführt und umspannt einen Teil der Vorderwand 8 und der Rückwand 10 und die eine Batteriemodulseitenwand 9. Das Spannband wird über den rippenartigen Verstärkungen 41, 42 geführt.

Das Batteriemodul 1 ist mit einem Deckel 45 abgedeckt, der die darunter liegenden Teile und Bauelemente, wie beispielsweise die Batteriemodulsteuerelektronik 47 schützt. Die Batteriemodulsteuerelektronik 47 kann in dem Batteriemodulgehäuse 2 oder in dem Deckel angeordnet sein. Besonders bevorzugt ist sie oberhalb der Abdeckplatte 48 angeordnet (Figur 1).

Die Abdeckplatte 48 aus Kunststoff ist oberhalb der Zwischenwände 13 und der Batteriezellen 5 angeordnet. Sie wird mittels der Rasthaken 49 (Fig. 2a und 2b) an der Oberseite der Zwischenwände 13 verhakt. Dadurch wird die Stabilität des gesamten Batteriemodulgehäuses 2 verbessert.

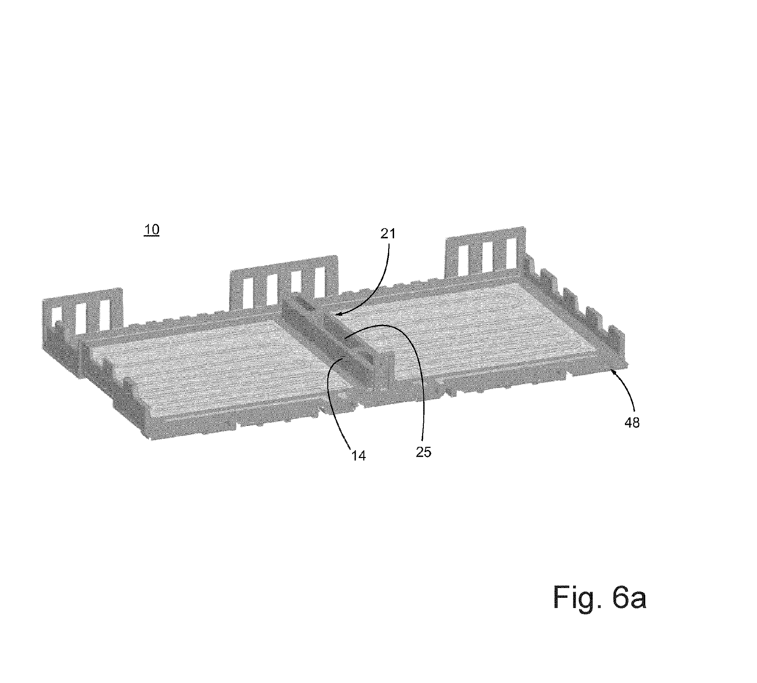

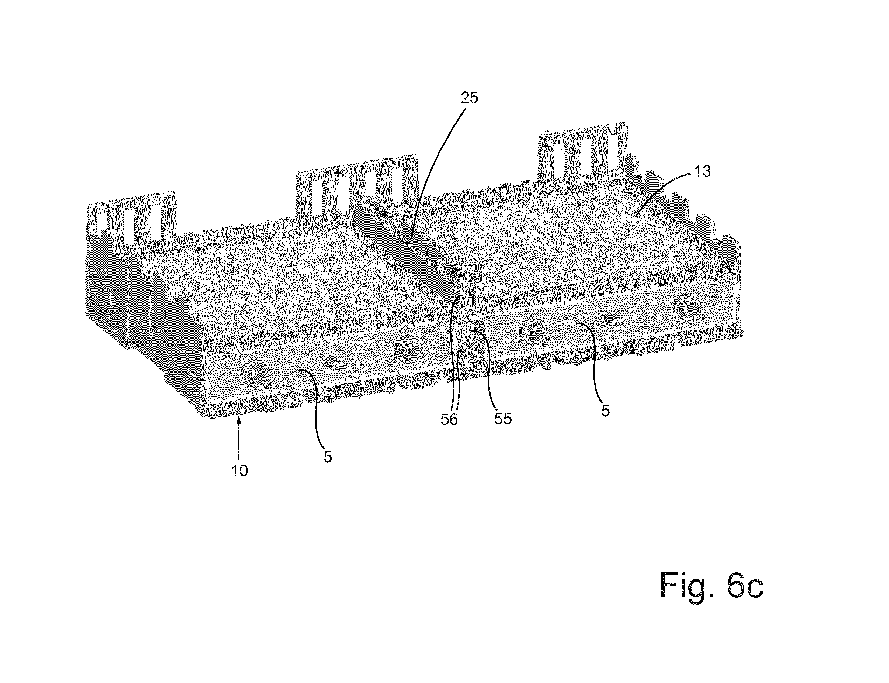

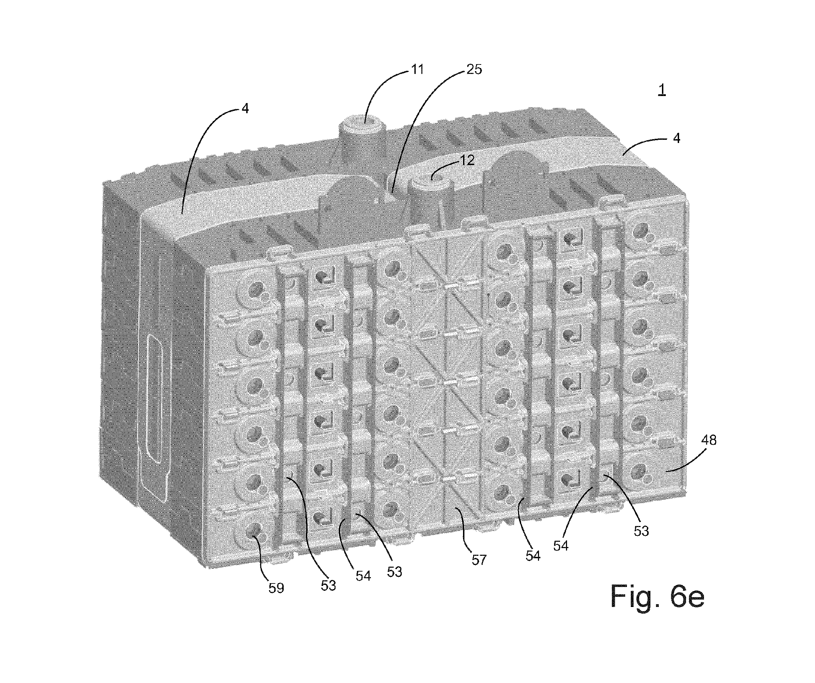

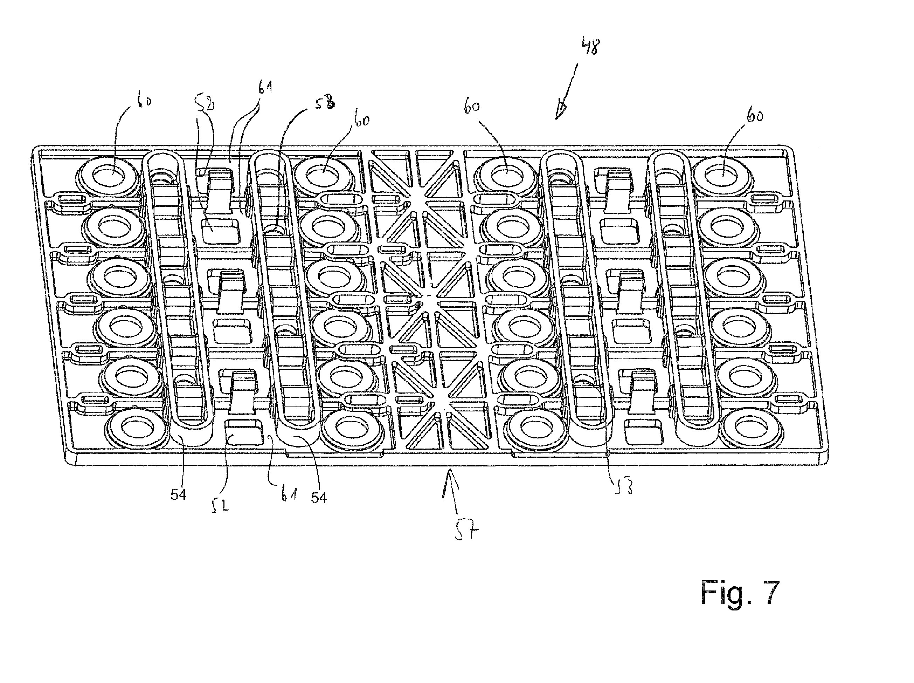

Die in Figur 7 gezeigte Abdeckplatte 48 weist entsprechende Öffnungen 60 für die elektrischen Anschlüsse 59 der Batteriezellen 5, Öffnungen 52 für die Elektrolyt-Befüllanschlüsse 46 (Fig. 6b) zum Befüllen der Batteriezellen 5 mit dem Elektrolyten sowie weitere Öffnungen 53 oberhalb der in Form von Berstscheiben 50 (Fig. 6 b) ausgebildeten Überdrucköffnung der Batteriezellen 5 auf. Die Elektrolyt-Befüllanschlüsse 46 der Batteriezellen 5 sind in Form von Röhren ausgebildet, die sich durch eine Befüllanschlussöffnung 52 der Abdeckplatte 48 erstreckt. Um die Befüllanschlussöffnung 52 ist eine muldenartige Vertiefung 61 vorgesehen, um überschüssige Elektrolytflüssigkeit aufzunehmen, falls sie beim Befüllen austritt. Die Elektrolytflüssigkeit kann nicht auf das Batteriezellgehäuse 6 gelangen und einfach während der Montage bzw. nach dem Befüllen der jeweiligen Batteriezelle entfernt werden. Dies ist besonders dann vorteilhaft, wenn die Batteriezellen 5 erst nach der Montage in dem Batteriemodulgehäuse 2 befüllt werden.

An der Oberseite weist die Abdeckplatte 48 mehrere kragenförmige Rahmen 54 auf, die je zwischen dem Befüllanschlussöffnungen 52 und den Durchlassöffnungen 60 für die elektrischen Anschlüsse 59 der Batteriezelle 5 angeordnet sind und die Berstscheibenöffnungen 53 der Abdeckplatte 48 umragen. Der kragenartige Rahmen 54 ist gegenüber dem Deckel 45 abgedichtet, so dass im Falle eines Überdrucks austretende Gase beim Sprung der Berstscheibe 50 innerhalb des Rahmens 54 gehalten werden und nicht unkontrolliert in die Umgebung hinaustreten. Gegenüber den bekannten Vorrichtungen zum Sammeln von aus Batteriezellen austretenden Gasen, wie z. B. US 5,643,691 oder US 7,504,175 B2, ist die kragenförmige Ausgestaltung des Rahmens sehr effektiv und gleichzeitig konstruktiv sehr einfach. Die von dem Rahmen 54 und dem Gehäusedeckel 45 gebildete Sammelkammer nimmt austretende Gase zuverlässig auf.

Optional kann das Batteriemodulgehäuse 2 im Deckel 45 zwei Auslassventile aufweisen, um die in den kragenartigen Rahmen 54 gesammelten Gase nach außen zu leiten. Gegebenenfalls findet die Ausleitung kontrolliert in die Umgebung statt, beispielsweise in die Umgebung außerhalb eines Fahrzeuges oder eines anderen Einsatzortes des Batteriemoduls. Alternativ können die Gase auch in einem externen Sammelbehälter gesammelt werden.

Da die benachbarten Batteriezellen 5 jeweils um 180 Grad gedreht angeordnet sind, damit jeweils ein Pluspol neben einem Minuspol der benachbarten Batteriezellen liegt, sind auch die außermittigen Berstscheiben 50 alternierend rechts bzw. links der Elektrolyt-Befüllanschlüsse 46 angeordnet. Deshalb weist die Abdeckplatte 48 insgesamt vier kragenartige Rahmen 54 auf.

In den Figuren 6a bis 6e ist der Montageprozess eines Batteriemoduls 1 verdeutlicht. Zunächst wird die Montage damit begonnen, dass die Rückwand 10 mit ihrer Außenseite auf eine Unterlage gelegt wird (Figur 6a). Anschließend werden zwei gleich ausgerichtete Batteriezellen 5 in die zwischen dem Mittelteil 14 und den Seitenwänden gebildeten Aufnahmen gelegt (Figur 6b).

In einem weiteren Schritt (Figur 6c) wird eine Zwischenwand 13 auf die Batteriezellen 5 aufgelegt und mit der Rückwand 10 verrastet. Dabei erstreckt sich der Stecker 22 der Zwischenwand 13 in die Buchse 21 der Rückwand 10, so dass die jeweiligen Verteilkanalstücke 23 und Sammelkanalstücke 24 dichtend miteinander verbunden werden. Die Zinnen 17 und Rücksprünge 18 der Zwischenwandseitenwände 15 greifen ineinander und bilden ein Batteriemodulgehäuseseitenwandteil.

Im nächsten Montageschritt werden auf die Zwischenwand 13 wiederum zwei Batteriezellen 5 gelegt, wobei in jedem Stapel die Batteriezellen 5 derart angeordnet sind, dass jeweils ein Pluspol der unteren Zelle 5 einem Minuspol der oberen Zelle 5 benachbart ist. Anschließend erfolgt wieder das Aufbringen einer weiteren Zwischenwand 13 bis insgesamt zwei Reihen mit je sechs Batteriezellen 5 aufeinander gestapelt sind. Je zwei benachbarte Zwischenwände 13 verrasten miteinander. Beim Verrasten greift eine Rastnase 55 einer Zwischenwand 13 in die Rastzunge 56 der nächsten Zwischenwand 13. Zusätzlich erfolgt eine Verrastung der Böden der benachbarten Zwischenwände 13. Gleiches erfolgt zwischen Zwischenwand und den Endwänden.

Als letzter Schritt erfolgt die Montage der Vorderwand 8, die auf die letzte Ebene der Batteriezellen 5 aufgelegt und mit der darunter liegenden Zwischenwand 13 verrastet wird (Figur 6d). Durch die Montage der Vorderwand 8, der Zwischenwände 13 und der Rückwand 10 wird die Batteriemodulgehäuseseitenwand 9 sowie der (nicht gezeigte) Batteriemodulgehäuseboden gebildet. Um die Stabilität des Batteriemodulgehäuses 2 weiter zu erhöhen, wird die Spannvorrichtung 3 angebracht, die aus zwei Spannbändern 4 besteht. Jedes Band 4 wird um jeweils eine Reihe (Stapel) von Batteriezellen 5 gespannt, wobei das Spannband 4 durch die jeweiligen Durchgangsausnehmungen 25 verläuft und in dem mittleren Bereich der Seitenwand in der Führung 19 geführt wird.

Figur 6d ist zu entnehmen, wie die benachbarten Zwischenwände 13 am oberen Ende miteinander verrasten. Als zusätzliche Verrastung greift die Rastnase 55 am oberen Ende der Buchse 21 in die korrespondierende Rastzunge 56 der Zwischenwand 13.

Figur 6e zeigt schließlich das Batteriemodulgehäuse 2 mit montierter Abdeckplatte 48. Zur endgültigen Fertigstellung des Batteriemoduls 1 werden dann noch die einzelnen Pole (elektrische Anschlüsse 59) der Batteriezellen 5 miteinander verbunden sowie die Anschlussklemmen 44 für das Batteriemodul 1 montiert. Optional wird in einer Mittelaufnahme 57 der Abdeckplatte 48 die Batteriemodulsteuerelektronik 47 positioniert. Das Anbringen des Deckels 45 schließt die Montage ab.

Optional ist im Deckel 45 des Batteriemodulgehäuses 2 ein elektrischer Anschluss für die Batteriemodulsteuerelektronik 47 vorgesehen. Dies kann beispielsweise eine Busleitung wie ein CAN-Bus sein.

Um höhere Spannungen und/ oder Kapazitäten zu erhalten können mehrere Batteriemodule 1 z.B. in einem Fahrzeug zusammengeschaltet werden. Die entstehende Batterie besteht dann aus einem oder mehreren Batteriemodulen 1. Die Batteriezellen, das Batteriemodul bzw. die gesamte Batterie lassen sich einzeln oder in Kombination steuern. Beispielsweise kann eine sicherheitstechnische Abschaltung einzelner Batteriemodule erfolgen. Auch ein Überbrücken der entsprechenden Batteriemodule könnte über die Batteriemodulsteuerelektronik oder Batteriesteuerelektronik gesteuert werden. Beispielsweise lässt sich durch eine geeignete Verschaltung der Batteriezellen 5 in dem Batteriemodul 1 und eine entsprechende Steuerung via der Batteriemodulsteuerelektronik 47 und/oder einer Batteriesteuerelektronik eine Sicherheitsschaltung realisieren, wie sie z. B. in WO 2011/095630 A1 offenbart ist.

Das Batteriemodul kann beispielsweise in einem Fahrzeug montiert und dort mit weiteren Batteriemodulen zusammengeschaltet und/oder an die Fahrzeugelektronik angeschlossen werden. Zusätzlich erfolgt noch der Anschluss an ein fahrzeugeigenes Kühlsystem, in dem ein Kühlmittelschlauch an den Kühlmitteleinlass 11 sowie ein weiterer an den Kühlmittelauslass 12 angeschlossen wird.

Das erfindungsgemäße Batteriemodul kann nicht nur in einem Fahrzeug verwendet werden. Das Batteriemodul kann beispielsweise auch zur Energiespeicherung und Einspeisung in das Mittel- und/oder Niederspannungsnetz oder zur dezentralen Energiespeicherung in Kombination mit Anlagen zur Gewinnung regenerativer Energien verwendet werden. Die erfindungsgemäßen Batteriemodule können zum Beispiel auch als unterbrechungsfreie Stromversorgung (USV) oder als Notstromversorgung eingesetzt werden. Ein mögliches weiteres Einsatzgebiet liegt in der Stabilisierung von Inselnetzen. Dabei werden bevorzugt mehrere Batteriemodule zusammengeschaltet. Die gewünschten Energieinhalte, Spannungsniveaus oder geforderten Stromstärken spiegeln sich dann in der Konfiguration der einzelnen Batteriemodule wieder und in der internen Anordnung der Batteriezellen.

Selbstverständlich ist es möglich, Batteriemodule nicht nur in der hier gezeigten Konfiguration aufzubauen. Zum einen können mehrere Batteriezellen miteinander kombiniert werden, so dass bei einer zweireihigen Anordnung der Batteriezellen 5 auch Module mit beispielsweise drei, vier oder neun Batteriezellen in je zwei Reihen angeordnet sind. Optional kann ein Batteriemodul aufgebaut werden, die nur eine Reihe an Batteriezellen 5 aufweist, beispielsweise können dann sechs, neun, zwölf oder 18 Zellen miteinander kombiniert werden. Im Fall der einreihigen Anordnung der Batteriezellen 5 ist der Verteilkanal 23 und der Sammelkanal 24 an der Seite der Batteriezellen 5 angeordnet. Das Verteilsystem für das Kühlmittel ist dann entsprechend anzupassen.

Im Rahmen der Erfindung wurde beispielhaft ein Batteriemodul 1 mit zwölf elektrisch in Reihe geschalteten Batteriezellen 5 näher untersucht. Die Batteriezellen 5 sind in zwei Reihen zu je sechs Zellen 5 angeordnet. Es wurde erkannt, dass die Kanalstruktur 32 des Kühlsystems im Batteriemodulgehäuse 2 bevorzugt derart ausgebildet ist, dass bei einer entsprechend dimensionierten externen Kühlflüssigkeitspumpe innerhalb des Kanals 31 im Batteriemodulgehäuse 2 die Kühlflüssigkeit mit einer Fließgeschwindigkeit von wenigstens 1 Liter pro Minute, bevorzugt wenigstens 1,5 Liter pro Minute fließt. In einer besonderen Ausführungsform ist die Fließgeschwindigkeit wenigstens 1,6 Liter pro Minute.

Untersuchungen haben beispielsweise gezeigt, dass mit einer derartigen Fließgeschwindigkeit die Temperatur in den Zellen auf maximal 40° C geregelt wird, eine Kühlflüssigkeitstemperatur von 25° C vorausgesetzt. Im ungekühlten Zustand würde die Temperatur einer Batteriezelle, deren Elektrolytlösung auf SO₂ basiert, auf über 60° C steigen, bei einem konstanten Entladestrom von 100 A. Eine derartige Temperaturerhöhung führt zu einer Erhöhung des Drucks. Der entstehende Druck wird auf das Batteriezellgehäuse 6 und auf das Batteriemodulgehäuse 2 übertragen, so dass - bei ungekühltem Betrieb des Batteriemoduls - Deformationen von mehr als 2,5 mm, teilweise bis über 3 mm auftreten können. Derartige Kräfte werden durch die effiziente Kühlung vermieden. Des Weiteren wird durch die Spannvorrichtung eine Beschädigung oder Deformation des Batteriemodulgehäuses verhindert.

## Patentansprüche

1. Batteriemodul umfassend ein Batteriemodulgehäuse mit Teilen aus Kunststoff und mehrere prismatische Batteriezellen, die ein Zellgehäuse mit vier Seitenwänden aufweisen, wobei zwei parallele Seitenwände größer sind als die beiden anderen Seitenwände,
wobei
- das Batteriemodulgehäuse (2) ein Kühlsystem mit einer Kanalstruktur (32) und einem fluiden Kühlmittel umfasst,
- die Kanalstruktur (32) mit einem Kühlmitteleinlass (11) und einem Kühlmittelauslass (12) des Batteriemodulgehäuses (2) in Fluidverbindung steht,
- zwischen zwei benachbarten Batteriezellen (5) eine Zwischenwand (13) aus Kunststoff im wesentlichen parallel zu den größeren Seitenwänden (7) der Batteriezelle (5) angeordnet ist,
- ein Kanal (31) der Kanalstruktur (32) wenigstens teilweise in der Zwischenwand (13) verläuft und mittels einer Ausnehmung (33) der Zwischenwand (13) gebildet ist, die mindestens zu einer benachbarten Seitenwand (7) der Batteriezelle (5) hin offen ist,
- zwischen der Seitenwand (7) der Batteriezelle (5) und der Zwischenwand (13) eine Kunststofftrennschicht (38), deren Material bevorzugt verschieden ist von dem Material der Zwischenwand (13) und deren Dicke geringer ist als die Dicke der Zwischenwand (13), derart angeordnet ist, dass der mittels der Ausnehmung (33) gebildete Kanal (31) des Kühlsystems durch die Kunststofftrennschicht (38) geschlossen ist.

2. Batteriemodul nach Anspruch 1, **dadurch gekennzeichnet, dass** der Elektrolyt der Batteriezellen bevorzugt auf SO₂ basiert.

3. Batteriemodul nach Anspruch 1 oder 2, **dadurch gekennzeichnet, dass** der Kunststoff der Batteriemodulgehäuseteile faserverstärkt, bevorzugt glasfaserverstärkt und besonders bevorzugt ein glasfaserverstärkter Polyamid ist.

4. Batteriemodul nach einem der vorhergehenden Ansprüche, **dadurch gekennzeichnet, dass** der Kunststoff der Batteriemodulgehäuseteile thermoplastisch ist, insbesondere der Kunststoff der Zwischenwand (13).

5. Batteriemodul nach einem der vorhergehenden Ansprüche, **dadurch gekennzeichnet, dass** die Dicke der Zwischenwand (13) höchstens 20 mm, bevorzugt höchstens 10 mm, weiter bevorzugt höchstens 7 mm, weiter bevorzugt höchstens 5 mm, besonders bevorzugt höchstens 4 mm und sehr bevorzugt 3 mm beträgt.

6. Batteriemodul nach einem der vorhergehenden Ansprüche, **dadurch gekennzeichnet, dass** die Ausnehmung (33) der Kanalstruktur (32) in der Zwischenwand (13) mäanderförmig ausgebildet ist und sich der Mäander von einem unteren Bereich der Zwischenwand (13) bis in einen oberen Bereich der Zwischenwand (13) erstreckt.

7. Batteriemodul nach dem vorhergehenden Anspruch, **dadurch gekennzeichnet, dass** der Mäander des Kanals (31) in Flussrichtung (37) der Kühlflüssigkeit enger werdende Mäanderschlaufen aufweisen, wobei die Mäanderschlaufen bevorzugt zum oberen Bereich der Zwischenwand (13) hin enger werden.

8. Batteriemodul nach einem der vorhergehenden Ansprüche, **dadurch gekennzeichnet, dass** sich die Ausnehmung (33) der Kanalstruktur (32) über die gesamte Dicke der Zwischenwand (13) erstreckt und zu den beiden benachbarten Seitenwänden (7) der Batteriezellen (5) hin offen ist.

9. Batteriemodul nach einem der vorhergehenden Ansprüche, **dadurch gekennzeichnet, dass** die Dicke der Kunststofftrennschicht (38) höchstens 20 %, bevorzugt höchstens 10 %, besonders bevorzugt höchstens 5 % der Dicke der Zwischenwand (13) beträgt und/oder bevorzugt die Dicke der Kunststofftrennschicht höchstens 1 mm, besonders bevorzugt höchstens 0,5 mm, sehr bevorzugt höchstens 0,1 mm beträgt.

10. Batteriemodul nach einem der vorhergehenden Ansprüche, **dadurch gekennzeichnet, dass** mehrere Batteriezellen (5) und die dazwischen angeordneten Zwischenwände (13) von einer Spannvorrichtung (3), bevorzugt aus Metall, umfasst sind, die während des Betriebs von den Batteriezellen (5) ausgeübte Kräfte aufnimmt.

11. Batteriemodul nach dem vorherigen Anspruch, **dadurch gekennzeichnet, dass** die Spannvorrichtung (3) ein Metall-Spannband (4) einschließt, das bevorzugt laserverschweißt ist und besonders bevorzugt einen selbst haltenden, noch mehr bevorzugt selbst rastenden, Schnellverschluss aufweist.

12. Batteriemodul nach einem der vorhergehenden Ansprüche, **dadurch gekennzeichnet, dass** der Kühlmitteleinlass (11) und/oder der Kühlmittelauslass (12) eine Schnellkupplung (58) zum einfachen, werkzeuglos betätigbaren Anschluss an ein externes Kühlsystem umfasst.

13. Batteriemodul nach einem der vorhergehenden Ansprüche, **dadurch gekennzeichnet, dass** das Batteriemodulgehäuse (2) eine obere Abdeckplatte (48) aufweist, die oberhalb der Batteriezellen (5) quer zu den Seitenwänden (9) des Batteriemodulgehäuses (2) angeordnet ist und die eine Befüllanschlussöffnung (52) für einen Elektrolyt-Befüllanschluss (46) zum Befüllen der Batteriezellen (5) mit dem Elektrolyten aufweist, wobei die Abdeckplatte (48) an ihrer Oberseite eine muldenartige Vertiefung (61) hat, die an die Befüllanschlussöffnung (52) angrenzt.

14. Batteriemodul nach einem der vorhergehenden Ansprüche, **dadurch gekennzeichnet, dass** die Zwischenwand (13) an ihren kurzen seitlichen Stirnseiten je eine Zwischenwandseitenwand (15) aufweist, die die kleinen Seitenwände (7b) des Zellgehäuses (6) wenigstens teilweise überragen und die bevorzugt gemeinsam mit anderen Zwischenwandseitenwänden (15) eine Batteriemodulgehäuseseitenwand (9) bilden, wobei die Zwischenwandseitenwände (15) bevorzugt derart miteinander korrespondieren, dass sie ineinandergreifen und besonders bevorzugt miteinander verrasten.

15. Batteriemodul nach einem der vorhergehenden Ansprüche, **dadurch gekennzeichnet, dass** die Zwischenwand (13) einen Zwischenwandboden (39) umfasst, der wenigstens teilweise unter die Batteriezellen (5) ragt und bevorzugt gemeinsam mit anderen Zwischenwandböden (39) den Boden des Batteriemodulgehäuses (2) bildet, wobei die Zwischenwandböden (39) bevorzugt derart korrespondieren, dass sie ineinandergreifen und besonders bevorzugt miteinander verrasten.

16. Batteriemodul nach einem der vorhergehenden Ansprüche, **dadurch gekennzeichnet, dass**
- das Batteriemodulgehäuse (12) zwei Endwände (8, 10) umfasst, die im Wesentlichen parallel zu den größeren Seitenwänden (7) der Batteriezellen (5) angeordnet sind;
- die Endwände (8, 10) einen zu ihren Innenseiten hin offenen Kanal (31) aufweisen, der Teil der Kanalstruktur (32) ist;
- die Endwände (8, 10) an ihren Außenseiten rippenartige Verstärkungen (41) aufweisen, die bevorzugt Quer- und Längsstreben umfassen; und
- eine Endwand (8, 10) die Rückwand (10) und die andere Endwand (8, 10) die Vorderwand (8) ist und an der Vorderwand (8) bevorzugt der Kühlmitteleinlass (11) und/oder der Kühlmittelauslass (12) angeordnet ist.

17. Verwendung des Batteriemoduls nach einem der vorhergehenden Ansprüche
- in einem Fahrzeug,
- zur Energiespeicherung und Einspeisung in das Mittel- und/oder Niederspannungsnetz,
- zur dezentralen Energiespeicherung in Kombination mit Anlagen zur Gewinnung regenerativer Energien,
- als unterbrechungsfreie Stromversorgung (USV) oder Notstromversorgung; oder
- zur Stabilisierung von Inselnetzen.

18. Fahrzeug umfassend ein Batteriemodul nach einem der vorhergehenden Ansprüche 1 bis 16.
